# EUROPEAN PATENT SPECIFICATION

(11) **EP 2 082 119 B1**
(45) Date of publication and mention of the grant of the patent: **01.01.2014**
(21) Application number: 07823243.6
(22) Date of filing: 12.11.2007
(51) Int. Cl.: F01L 3/12, F01L 3/22

(54) **VALVE SEAT INSERT FOR A PISTON ENGINE**
VENTILSITZEINSATZ FÜR EINEN KOLBENMOTOR
SIÈGE DE SOUPAPE RAPPORTÉ D'UN MOTEUR À PISTONS

(30) Priority: 14.11.2006 FI 20065722
(43) Date of publication of application: 29.07.2009
(73) Proprietor: Wärtsilä Finland Oy, 65380 Vaasa (FI)
(72) Inventor: SILVONEN, Aulis, 65230 Vaasa (FI); LILJENFELDT, Gösta, 65450 Solf (FI); OJANSUU, Juha, 20100 Turku (FI)
(74) Representative: Berggren Oy Ab
(86) International application number: PCT/FI2007/050607
(87) International publication number: WO 2008/059108

(56) References cited:
- DE-A1-102004 027 084
- JP-A- 58 023 214
- JP-A- 60 026 110
- JP-A- 60 026 110
- JP-U- 56 004 611
- JP-U- 56 050 708
- US-A- 3 115 125
- US-A- 3 115 125
- US-A- 4 200 066
- US-A- 4 941 436

## Description

The present invention relates to a valve seat insert for a piston engine.

In a piston engine the task of the cylinder head is to close the upper end of the cylinder sleeve and form the upper part of the combustion chamber. The cylinder head accommodates inlet and exhaust passages for the gases of the combustion process and provides a base for the valve gear and in a diesel engine for the fuel injection valve. The cylinder head is also provided with cooling ducts for cooling the components that require cooling. One of the components in the cylinder head that needs to be cooled is the exhaust valve seat insert, i.e. the counter surface for the exhaust valve disc, which surface is subject to high thermal loading. If the seat insert heats up excessively, it may develop permanent deformations causing leakage in the exhaust valve.

For cooling the exhaust valve seat insert various solutions have been developed. For instance the cooling ducts in the cylinder head may be arranged as close to the seat insert as possible or a separate cooling duct for cooling liquid may be adapted in conjunction with the seat insert. Problems related to this kind of solutions include insufficient cooling effect and cooling liquid leakages.

Document JP 56 004611 U discloses a cooled valve seat insert having an annular cooling duct arranged inside the insert and an inlet port conveying cooling liquid into the cooling duct and an outlet port for discharging cooling liquid out of the cooling duct. JP 58 050708 U discloses a similar valve seat insert.

DE 10 2004 027084 A1 discloses a cooled valve seat ring that comprises ring parts forming an annular flow channel which is integrated via inlet and outlet holes in one of the ring parts after pressing into the cylinder head forming a pressing seat surface in the coolant circulation of an engine.

JP 60 026110 A shows a water-cooled exhaust valve seat of an internal combustion engine. A cooling water pipe communicating with a cooling water flow pipe is integrally cast with the valve seat of an exhaust valve.

JP 58 023214 A discloses a cooling structure of an exhaust valve seat section. An exhaust valve seat member having an exhaust valve seat and a cooling water chamber is fitted into an engine cylinder cover, and an exhaust valve box is fitted above it. A cooling water passage is provided in the cylinder cover member, and the cooling water fed in through an inlet port flows through the cooling water passages in the valve box then flows out through an outlet port. On the other hand, the cooling water is fed into the valve seat cooling water chamber through an inlet port and the passage in the valve box, and it flows out of an outlet port through the passage in the valve box. The valve seat member cooling water passage is made independent of the cooling water system of the cylinder cover and the valve box.

US 4941436 A shows a valve seat insert, which together with a cylinder head of an engine forms a cooling duct. The inlet and outlet ports of the cooling duct are arranged in the cylinder head.

A purpose of this invention is to improve the cooling of the valve seat insert in a piston engine.

The objects of the invention are achieved as disclosed in the appended claim 1. A valve seat insert according to the invention comprises a cooling duct, an inlet port for conveying cooling liquid into the cooling duct and an outlet port for discharging cooling liquid out of the cooling duct. According to the invention the inlet port and the outlet port are arranged close to one another. In addition, the cooling duct is arranged between the inlet port and the outlet port so that it extends at least almost around the whole seat insert. The valve seat insert is a one-piece part. The cooling duct is unbranched and the inlet port and the outlet port are arranged at the outer periphery of the seat insert.

Considerable advantages are achieved by the present invention.

The inlet port and the outlet port of the seat insert are arranged close to one another, and cooling liquid flows in the cooling duct between the inlet port and the outlet port at least almost around the whole seat insert. Due to steady cooling liquid circulation no uncooled areas remain in the seat insert, which improves the cooling of the seat insert and prolongs the operating life of the seat insert.

The seat insert is preferably a one-part cast or a one-part piece manufactured by hot isostatic pressing. Compared to a seat insert made of several separate parts e.g. by welding, there are fewer surfaces to be sealed, whereby cooling liquid leakages from the cooling duct are less significant. Moreover, it is easy to place the cooling water duct in a suitable position in the cast and shape it as desired.

The seat insert is connected by a shrinkage fit to the cylinder head and the outer periphery of the seat insert acts as a joint face for the counter surface in the cylinder head. Then the inlet port and the outlet port that open to the outer periphery of the seat insert can be connected tightly to the cooling liquid circulation and the connecting points are protected from the exhaust gases of the engine. Further, the inlet port and the outlet port at the outer periphery may be used as supporting points for the foundry core, while the seat insert is being cast, whereby the ports need not to be closed or sealed after the casting.

In the following, the invention is described in more detail with reference to the appended drawings, in which
Figure 1 is a cross section of one seat insert according to the invention mounted in conjunction with the cylinder head; and
Figure 2 shows the seat insert of Fig. 1 sectioned along the line A-A.

The drawings show a valve seat insert 1 of a piston engine attached to a cylinder head 5 of a liquid-cooled piston engine, e.g. a large diesel engine, by a shrinkage fit. The outer periphery 8 of the seat insert 1 is adapted against the edge of the recess in the cylinder head 5. The task of the cylinder head 5 is to close the upper end of the cylinder sleeve and form the upper part of the combustion chamber 7 of the cylinder. In addition, the cylinder head 5 is provided with an inlet passage and an exhaust passage 6 for the gases of the cylinder's combustion process. The gas flow through the inlet passage and exhaust passage is controlled by valves arranged in conjunction with the passages. The cylinder head also acts as a base for the valve gear and in a diesel engine for the fuel injection valve. The cylinder head 5 is provided with flow ducts for cooling liquid, which ducts are part of the engine's cooling system. The drawings show the exhaust valve seat insert 1, which acts as a counter surface for the exhaust valve disc (not shown). The seat insert 1 encircles the exhaust passage 6.

The seat insert 1 encompasses an annular cooling duct 2. The seat insert 1 is cooled by the cooling liquid flowing in the cooling duct. The cooling duct 2 is arranged completely inside the seat insert 1, i.e. the seat insert forms all the walls of the cooling duct 2. The seat insert encircles the cooling duct 2 completely. The cooling duct 2 extends almost around the whole seat insert 1. The seat insert 1 comprises also an inlet port 3 for conveying cooling liquid into the cooling duct 2 and an outlet port 4 for discharging cooling liquid out of the cooling duct 2. The inlet port 3 and the outlet port 4 are connected to the cooling circuit of the cylinder head 5 or to a cooling circuit independent thereof. The inlet port 3 and the outlet port 4 are arranged close to one another. The cooling duct 2 is arranged between the inlet port 3 and the outlet port 4 so that it extends at least almost around the whole seat insert 1. In addition to the inlet port 3 and the outlet port 4 the cooling duct 2 has no other openings, through which cooling liquid is allowed to enter or exit the cooling duct 2, i.e. the cooling duct 2 is in flow connection with only one inlet port and one outlet port. Moreover, the shorter route between the inlet port 3 and the outlet port 4 is closed. Thus, the cooling liquid fed into the seat insert 1 circulates in the cooling duct 2 almost around the whole seat insert 1 between the inlet port 3 and the outlet port 4. Since the cooling duct 2 is not branched, all the cooling liquid fed into the seat insert 1 flows in the cooling duct 2 by only one route between the inlet port 3 and the outlet port 4. The flow directions of the cooling liquid in the seat insert 1 are indicated by arrows in the drawings.

In order to provide a sufficiently uniform cooling effect the inlet port 3 and the outlet port 4 are arranged as close to one another as possible. The central angle α between the centre of the inlet port 3 and the centre of the outlet port 4 is 70º at the most, preferably 20° at the most. The central angle α is, however, at least 5°, preferably at least 10º. Thus the reflex central angle ß between the centre of the inlet port 3 and the centre of the outlet port 4 is at least 290º, preferably at least 340º. The central angle ß is, however, 355º at the most, preferably 350º at the most. The central angle is the angle between the straight line connecting the centre P of the seat insert to the centre of the inlet port 3 and the straight line connecting the centre P of the seat insert to the centre of the outlet port 4. The cooling duct 2 curves around the centre P of the seat insert to the extent of the reflex central angle ß.

The inlet port 3 and the outlet port 4 are located at the outer periphery 8 of the seat insert 1, i.e. on the surface, which is adapted by the shrinkage fit of the seat insert 1 against the counter surface on the cylinder head 5. The seat insert 1 is a one-piece part, for instance a one-piece cast part, i.e. it is manufactured by casting. During the casting, the foundry core of the cooling duct is supported at the inlet port and the outlet port and possibly also at some additional points elsewhere. Alternatively, the seat insert 1 may be manufactured by using a powder metallurgical manufacturing method, for instance hot isostatic pressing (HIP). Here, powdered raw material is encapsulated inside a sheet capsule, which conforms to the forms of the finished product in such a way that the deformation caused by hydrostatic pressing (about 1800 bar), which is performed later on, is taken into account. The cooling duct is made of a tube and placed in the capsule before it is filled with powder. The powder-filled capsule is subjected to uniform pressure from every direction, while the capsule is at high temperature, whereby the powdered raw material is compacted to the shape according to the mould.

Cooling liquid is supplied through the inlet port 3 into the cooling duct 2. The cooling liquid circulates in the cooling duct 2 almost around the whole seat insert 1, and subsequently, the cooling liquid is discharged from the cooling duct 2 through the outlet port 4. The cooling liquid circulates in the cooling duct 2 around the centre P of the seat insert to the extent of the reflex central angle ß.

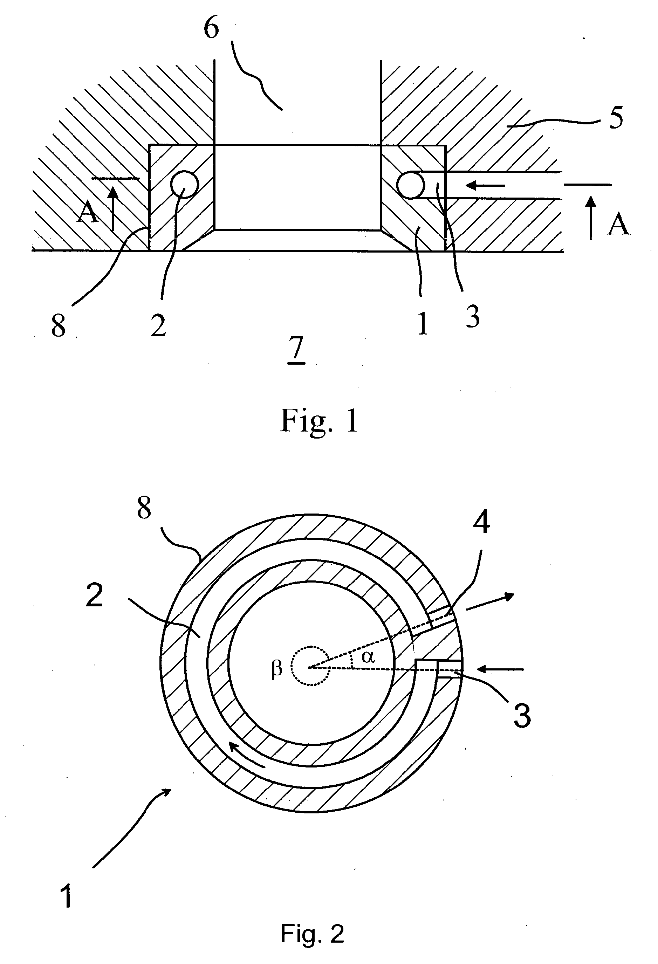

The invention has embodiments that differ from the above-described one. In the embodiment according to Figures 1 and 2 the shorter section of the cooling duct 2 between the inlet port 3 and the outlet port is closed, i.e. cooling liquid is allowed to flow between the ports 3, 4 only along the longer route passing almost around the whole seat insert. The cooling duct 2 may be shaped so that it is completely annular extending around the whole seat insert and having an open shorter section between the inlet port 3 and the outlet port 4 as well. The shorter section is provided with a throttling so that only a small quantity of cooling liquid between the inlet port 3 and the outlet port 4 flows through this route, while most of the cooling liquid flows along the longer route around almost the whole seat insert 1. Similarly to the embodiment according to Figures 1 and 2, also in this embodiment the seat insert encircles the cooling duct completely.

## Claims

1. A valve seat insert (1) for a piston engine, the seat insert comprising a cooling duct (2) arranged completely inside the seat insert (1), an inlet port (3) for conveying cooling liquid into the cooling duct (2) and an outlet port (4) for discharging cooling liquid out of the cooling duct (2), said inlet port (3) and said outlet port (4) being arranged close to one another, and said cooling duct (2) being arranged between the inlet port (3) and the outlet port (4) so that it extends at least almost around the whole seat insert (1), wherein the valve seat insert (1) is a one-piece part, wherein the cooling duct (2) is unbranched and wherein the inlet port (3) and the outlet port (4) are arranged at the outer periphery (8) of the seat insert (1).

2. A seat insert according anyone of the preceding claims, **characterised in that** the central angle (α) between the centre of the inlet port (3) and the centre of the outlet port (4) is 70º at the most, preferably 20º at the most.

3. A cylinder head arrangement for a piston engine comprising a cylinder head (5), which is provided with an exhaust passage (6) for discharging exhaust gases from the combustion chamber (7) of the cylinder, **characterised in that** a valve seat insert (1) according to claim 1 or 2 is arranged in conjunction with the exhaust passage (6), which seat insert (1) is connected through an inlet port (3) and an outlet port (4) to the cooling system.

## Patentansprüche

1. Ventilsitzeinsatz (1) für einen Kolbenmotor, wobei der Sitzeinsatz einen Kühlkanal (2), der vollständig im Inneren des Sitzeinsatzes (1) eingerichtet ist, eine Einlassöffnung (3) zum Befördern von Kühlflüssigkeit in den Kühlkanal (2) und eine Auslassöffnung (4) zum Auslassen der Kühlflüssigkeit aus dem Kühlkanal (2) umfasst, wobei die Einlassöffnung (3) und die Auslassöffnung (4) dicht aneinander eingerichtet sind, und der Kühlkanal (2) so zwischen der Einlassöffnung (3) und der Auslassöffnung (4) eingerichtet ist, dass er sich wenigstens fast um den gesamten Sitzeinsatz (1) erstreckt, wobei der Ventilsitzeinsatz (1) ein einstückiger Teil ist, der Kühlkanal (2) unverzweigt ist, und wobei die Einlassöffnung (3) und die Auslassöffnung (4) an dem Außenumfang (8) des Sitzeinsatzes (1) angeordnet sind.

2. Sitzeinsatz nach einem der vorhergehenden Ansprüche, **dadurch gekennzeichnet, dass** der Mittelpunktswinkel (α) zwischen der Mitte der Einlassöffnung (3) und der Mitte der Auslassöffnung (4) höchstens 70 ° und vorzugsweise höchstens 20 ° beträgt.

3. Zylinderkopfanordnung für einen Kolbenmotor, der einen Zylinderkopf (5) umfasst, welcher mit einem Abgasdurchgang (6) zum Auslassen von Abgasen aus der Verbrennungskammer (7) des Zylinders versehen ist, **dadurch gekennzeichnet, dass** ein Ventilsitzeinsatz (1) nach Anspruch 1 oder 2 in Verbindung mit dem Abgasdurchgang (6) eingerichtet ist, wobei der Sitzeinsatz (1) durch eine Einlassöffnung (3) und eine Auslassöffnung (4) mit dem Kühlsystem verbunden ist.

## Revendications

1. Siège de soupape rapporté (1) d'un moteur à pistons, le siège rapporté comprenant un conduit de refroidissement (2) agencé complètement à l'intérieur du siège rapporté (1), un port d'entrée (3) pour transporter du liquide de refroidissement dans le conduit de refroidissement (2) et un port de sortie (4) pour évacuer du liquide de refroidissement hors du conduit de refroidissement (2), le port d'entrée (3) et le port de sortie (4) étant agencés l'un près de l'autre, et le conduit de refroidissement (2) étant agencé entre le port d'entrée (3) et le port de sortie (4) de telle sorte qu'il s'étend au moins presque tout autour du siège rapporté (1), sachant que le siège de soupape rapporté (1) est une pièce d'un seul tenant, sachant que le conduit de refroidissement (2) n'est pas ramifié et sachant que le port d'entrée (3) et le port de sortie (4) sont agencés sur la périphérie extérieure (8) du siège rapporté (1).

2. Siège de soupape rapporté selon la revendication précédente, **caractérisé en ce que** l'angle central (α) entre le centre du port d'entrée (3) et le centre du port de sortie (4) fait 70° au plus, de préférence 20° au plus.

3. Agencement de culasse de cylindre pour un moteur à pistons comprenant une culasse de cylindre (5) dotée d'un passage d'échappement (6) pour évacuer des gaz d'échappement de la chambre à combustion (7) du cylindre, **caractérisé en ce qu'**un siège de soupape rapporté (1) selon la revendication 1 ou 2 est agencé en lien avec le passage d'échappement (6), lequel siège rapporté (1) est relié au système de refroidissement via un port d'entrée (3) et un port de sortie (4).
